# FASCICULE DE BREVET EUROPEEN

(11) **EP 3 911 535 B1**
(45) Date de publication et mention de la délivrance du brevet: **15.05.2024**
(21) Numéro de dépôt: 20700584.4
(22) Date de dépôt: 13.01.2020
(51) Int. Cl.: B60N 2/30, B60N 2/42

(54) **DISPOSITIF D'ASSISE REGLABLE EN HAUTEUR**
HÖHENVERSTELLBARE SITZVORRICHTUNG
ADJUSTABLE-HEIGHT SEAT DEVICE

(30) Priorité: 14.01.2019 FR 1900320
(43) Date de publication de la demande: 24.11.2021
(73) Titulaire: Autoliv Development AB, 447 83 Vårgårda (SE)
(72) Inventeur: RYDSMO, Erik, 46695 Sollebrunn (SE); AHLQVIST, Anders, 447 34 Vargarda (SE)
(74) Mandataire: Poindron, Cyrille
(86) Numéro de dépôt international: PCT/EP2020/050665
(87) Numéro de publication internationale: WO 2020/148220

(56) Documents cités:
- DE-A1- 19 522 967
- FR-A1- 2 706 381

## Description

La présente invention concerne un dispositif d'assise et en particulier un dispositif d'assise destiné à permettre le réglage en hauteur d'une portion d'assise. Selon un exemple particulier, la présente invention propose un dispositif d'assise réglable destiné à être intégré dans une assise ou une banquette de véhicule, pour permettre de rehausser une portion d'assise de véhicule pour installer des enfants et les ceinturer en toute sécurité.

Le document WO2015167378 divulgue un dispositif d'assise réglable en hauteur, comprenant notamment un système d'articulation avec un parallélogramme déformable et un support diagonal de renfort, mais cette structure peut être complexe à fabriquer, et peut présenter des inconvénients lors de l'utilisation, avec des glissements entre le support diagonal de renfort et les bras d'articulation du parallélogramme déformable qui peuvent générer de l'usure, des bruits, ou des blocages. Le document DE 19522967 A1 divulgue un siège d'enfant intégré dans un siège de véhicule. Le document FR2706381A1 divulgue un siège d'enfant intégrable pour siège de véhicule.

Un but de la présente invention est de répondre aux inconvénients de l'art antérieur mentionnés ci-dessus et en particulier, tout d'abord, de proposer un dispositif d'assise réglable qui soit simple à fabriquer, et qui présente un usage aisé et fiable.

Pour cela un premier aspect de l'invention concerne un dispositif d'assise réglable pour véhicule, comprenant :
- une portion de base,
- une portion d'assise, mobile par rapport à la portion de base entre une première position, dite escamotée, et une deuxième position, dite déployée,
- un système d'articulation formant un parallélogramme déformable, connecté à la portion de base et à la portion d'assise, et comprenant au moins un bras support diagonal connecté en diagonale au parallélogramme déformable,
caractérisé en ce que le bras support diagonal est agencé pour présenter une première longueur lorsque la portion d'assise est dans la première position, et une deuxième longueur lorsque la portion d'assise est dans la deuxième position.

Le dispositif selon la mise en oeuvre ci-dessus comprend un bras support diagonal dont la longueur varie. Autrement dit, le bras support diagonal est extensible, et prévu pour varier de longueur lors du mouvement de la portion d'assise par rapport à la portion de base. En conséquence, les deux extrémités du bras support diagonal peuvent rester constamment accrochées au parallélogramme déformable au cours du déploiement ou de l'escamotage, ce qui simplifie le système, la cinématique et évite de prévoir des pistes de glissement d'une extrémité du bras support diagonal sur un bras d'articulation du parallélogramme déformable.

Dans la présente demande, un parallélogramme déformable comprend typiquement quatre barres et forme un système composé de quatre corps rigides, en général articulés entre eux par des liaisons tournantes : rotules ou pivots. Dans leur forme la plus simple, les pièces sont des barres, les liaisons étant aux extrémités des barres ; une des barres peut être reliée au châssis du véhicule ou à son assise, et forme alors la portion de base ; une des autres barres (opposée à la portion de base) est alors mobile selon un mouvement de translation circulaire par rapport à la portion de base.

Avantageusement, le bras support diagonal est agencé pour procurer une butée mécanique à la portion d'assise, lorsque la portion d'assise est dans la deuxième position. Une butée intégrée au bras support diagonal permet de simplifier la conception générale du dispositif.

Avantageusement, le bras support diagonal comprend :
- des premiers moyens de blocage agencés pour bloquer le bras support diagonal dans la deuxième longueur lorsque la portion d'assise est dans la deuxième position, et agencés pour s'engager et résister à un premier effort, dit effort d'utilisation normale, appliqué à la portion d'assise,
- des deuxièmes moyens de blocage agencés pour bloquer le bras support diagonal dans la deuxième longueur lorsque la portion d'assise est dans la deuxième position, et agencés pour s'engager et résister à un deuxième effort, dit effort de choc véhicule et supérieur au premier effort, appliqué à la portion d'assise,
et les deuxièmes moyens de blocage sont engagés uniquement lorsque le deuxième effort est appliqué à l'assise. Selon la mise en oeuvre ci-dessus, le bras support diagonal comprend deux moyens de blocage distincts, ayant chacun un mode d'engagement spécifique. Les premiers moyens de blocage sont prévus pour procurer une butée mécanique lors de l'utilisation normale (supporter un occupant, par exemple un enfant, dont le poids est inférieur à 60 kg, et de préférence inférieur à 45 kg, et plus préférentiellement inférieur à 36 kg). Les deuxièmes moyens de blocage sont prévus pour procurer une butée mécanique lors d'une décélération brutale du véhicule, c'est-à-dire un choc, lorsque l'effort appliqué est bien supérieur à celui créé par le poids d'un enfant (par exemple plusieurs centaines de kilogrammes).

Dans le détail, en position d'utilisation, les premiers moyens de blocage sont engagés lors de l'utilisation normale, et il existe alors un jeu ou un espace au sein des deuxièmes moyens de blocage, si bien que le système n'est pas hyperstatique. La fabrication est simplifiée. Cependant, en cas de choc véhicule, la décélération imposée au véhicule et aux occupants peut générer un deuxième effort (important) sur le système. Les premiers moyens de blocage sont prévus pour se déformer de sorte à rattraper le jeu ou espace interne des deuxièmes moyens de blocage qui ont une capacité de résistance supérieure une fois engagés, pour résister au deuxième effort.

Avantageusement, le bras support diagonal comprend :
- une première pièce et
- une deuxième pièce mobile par rapport à la première pièce. La structure interne est simple, avec seulement deux pièces internes mobiles l'une par rapport à l'autre.

Avantageusement, la deuxième pièce est mobile par rapport à la première pièce :
- selon une translation pendant une première partie du déplacement de la portion d'assise de la position escamotée vers la position déployée,
- selon au moins une rotation de verrouillage pendant une deuxième partie du déplacement de la portion d'assise de la position escamotée vers la position déployée. Avantageusement, la rotation de verrouillage intervient en toute fin de déplacement de la portion d'assise,

Avantageusement, la deuxième pièce est mobile par rapport à la première pièce :
- selon une translation pendant une première partie du déplacement de la portion d'assise de la position escamotée vers la position déployée,
- selon une translation combinée à une déformation élastique de l'une de la deuxième pièce ou de la première pièce, pendant une deuxième partie du déplacement de la portion d'assise de la position escamotée vers la position déployée. La déformation élastique peut être générée par une portion des premiers moyens de blocage.

Avantageusement, le bras support diagonal comprend une liaison glissière de la première pièce par rapport à la deuxième pièce.

Avantageusement, la deuxième pièce est montée en liaison pivot par rapport à la portion d'assise, et la première pièce est montée en liaison pivot par rapport à la portion de base.

Avantageusement, la première pièce et/ou la deuxième pièce est (sont) formée(s) à partir d'une feuille de tôle emboutie. En particulier, la liaison glissière est alors obtenue en rabattant deux portions de tôle en U, de chaque côté d'une des deux pièces.

Selon l'invention, le système d'articulation comprend :
- un premier bras d'articulation, connecté à un pivot avant inférieur de la portion de base et à un pivot avant supérieur de la portion d'assise,
- un deuxième bras d'articulation connecté à un pivot arrière inférieur de la portion de base et à un pivot arrière supérieur de la portion d'assise,
et le bras support diagonal est connecté au pivot avant supérieur de la portion d'assise et au pivot arrière inférieur de la portion de base.

Avantageusement, le dispositif d'assise réglable comprend au moins un élément de rappel élastique, et au moins deux articulations pivot distinctes du parallélogramme déformable comprennent chacune une portion dudit au moins un élément de rappel élastique.

Avantageusement, ledit au moins un élément de rappel élastique est formé par un fil élastique comprenant au moins deux portions rectilignes, chaque portion rectiligne formant un axe de charnière pour chacune des deux articulations pivot distinctes.

En conséquence, chaque portion rectiligne agit comme une barre de torsion et on peut prévoir un peigne en bout de chaque pièce liée à l'articulation, avec des alésages pour recevoir les portions rectilignes. L'assemblage et la fabrication des pièces sont aisés.

Avantageusement, ledit au moins un élément de rappel élastique comprend au moins une extrémité déformée plastiquement, de sorte à rendre l'élément de rappel élastique indémontable des articulations pivot. En effet, en fin de montage, une opération de pliage (déformation permanente) permet de rendre le système indémontable, ce qui assure une bonne sécurité d'utilisation.

Avantageusement, ledit au moins un élément de rappel élastique présente une forme générale en U, avec ses extrémités pliées, de sorte à rendre l'élément de rappel élastique indémontable des articulations pivot.

Avantageusement, ledit au moins un élément de rappel élastique présente une mise en tension de sorte à imposer à la portion d'assise une position d'équilibre, agencée entre la position escamotée et la position déployée. Selon un réglage initial, la position d'équilibre est prévue entre la position escamotée et la position déployée, le passage dans chacune de ces positions escamotée ou déployée provoque une mise en tension qui permet de limiter les bruits de cliquetis. Cela facilite aussi l'utilisation du système, avec un début de mouvement automatique depuis l'une de la position escamotée ou déployée vers la position d'équilibre.

Avantageusement, le dispositif d'assise réglable comprend une poignée de commande. On peut bien entendu prévoir un système de verrouillage en position escamotée commandé par la poignée. En particulier, on peut prévoir un pêne de verrouillage directement intégré à la poignée qui est embarquée sur la portion d'assise, et une gâche dans la portion de base (ou vice versa), si bien que le pêne peut s'engager dans la gâche, lorsque la portion d'assise est en position escamotée.

Un deuxième aspect de l'invention concerne une assise de siège de véhicule, de préférence pour un siège de rang deux ou supérieur, comprenant au moins un dispositif d'assise réglable selon le premier aspect de l'invention.

Un troisième aspect de l'invention concerne un véhicule automobile comprenant au moins un dispositif d'assise réglable selon le premier aspect de l'invention.

Un quatrième aspect de l'invention concerne un procédé d'assemblage d'un dispositif d'assise réglable selon le premier aspect de l'invention, comprenant au moins une phase d'assemblage d'une articulation pivot du parallélogramme déformable, comprenant les étapes consistant à :
- insérer une portion rectiligne d'un élément de rappel élastique formant un axe de charnière dans au moins une portion femelle de chacune des pièces liées à l'articulation pivot, de sorte à former une charnière,
- déformer plastiquement une extrémité libre de la portion rectiligne, de sorte à rendre indémontable l'élément de rappel élastique de la charnière formée.

Avantageusement, le procédé d'assemblage comprend une étape consistant à accrocher l'extrémité pliée à l'une des pièces liées à l'articulation pivot.

Avantageusement, le procédé d'assemblage comprend une étape consistant à mettre en tension l'élément de rappel élastique, avant d'accrocher l'extrémité pliée à l'une des pièces liées à l'articulation pivot.

Les dessins annexés illustrent l'invention :
[Fig.1] représente un dispositif d'assise selon l'invention, avec une portion d'assise dans une position escamotée ;
[Fig.2] représente le dispositif d'assise de la figure 1, avec la portion d'assise dans une position d'équilibre ;
[Fig.3] représente le dispositif d'assise de la figure 1, avec la portion d'assise dans une position déployée ;
[Fig.4] représente le dispositif d'assise de la figure 1 en perspective, avec la portion d'assise dans la position déployée ;
[Fig.5] représente une vue de face partielle du dispositif d'assise de la figure 1, avec la portion d'assise dans la position déployée ;
[Fig.6] représente une coupe du dispositif d'assise de la figure 5, avec la portion d'assise dans la position déployée ;
[Fig.7] représente le dispositif d'assise de la figure 1 en perspective, avec la portion d'assise dans la position déployée.

En référence à ces dessins, le dispositif d'assise réglable comprend notamment une portion de base 10, une portion d'assise 20, et un système d'articulation 30.

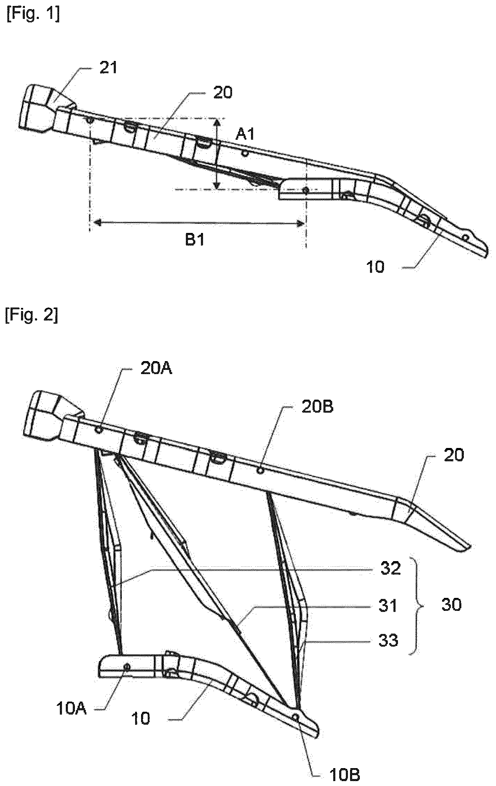

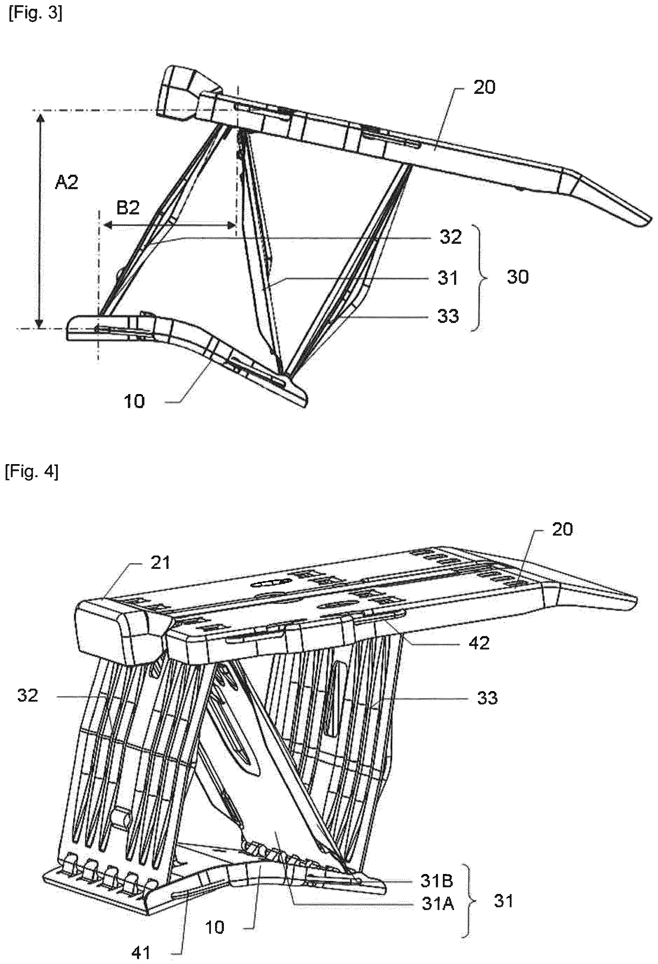

Les figures 1 à 3 représentent le dispositif d'assise réglable sans sa garniture, c'est-à-dire que ne sont représentée que les pièces d'armature ou de structure. Le dispositif d'assise réglable est destiné à être intégré dans une assise de véhicule, avec la portion d'assise 20 en position escamotée (figure 1) agencée affleurante ou au même niveau que le reste de l'assise de véhicule, et la portion d'assise 20 en position déployée (figure 3 ou figure 4 ou figure 7) agencée au dessus du reste de l'assise de véhicule, pour permettre de ceinturer correctement un enfant de petite taille, ce qui évite de devoir prévoir un rehausseur séparé.

La figure 1 représente le dispositif d'assise avec la portion d'assise 20 dans une position escamotée, c'est-à-dire avec la portion d'assise 20 repliée contre la portion de base 10. Ainsi, la portion d'assise 20 et la garniture (non représentée) de la portion d'assise 20 peuvent être situées au même niveau que le reste de l'assise du véhicule. Un adulte peut s'assoir en tout confort.

La figure 3 représente le dispositif d'assise avec la portion d'assise 20 dans une position déployée, c'est-à-dire avec la portion d'assise 20 relevée par rapport à la portion de base 10. Ainsi, la portion d'assise 20 et la garniture (non représentée) de la portion d'assise 20 sont bien au dessus du reste de l'assise du véhicule, si bien qu'un enfant de petite taille peut être ceinturé en toute sécurité.

Selon l'exemple représenté et en référence aux figures 1 et 3, la portion d'assise 20 se déplace de :
(A2-A1) = 95 mm dans la direction verticale vers le haut;
(B1 + B2) = 150 mm dans la direction horizontale vers l'arrière. Bien entendu, ces valeurs sont indicatives, et on peut envisager de les ajuster selon les besoins.

Le dispositif d'assise comprend un système d'articulation 30, avec un parallélogramme déformable visible figures 2, 3, 4 et 7, et notamment formé par :
- un premier bras d'articulation 32 connecté à un pivot avant inférieur 10a de la portion de base 10 et à un pivot avant supérieur 20A de la portion d'assise 20 et
- un deuxième bras d'articulation 33 connecté à un pivot arrière inférieur 10B de la portion de base 10 et à un pivot arrière supérieur 20B de la portion d'assise 20.

Le système d'articulation 30 comprend également un bras support diagonal 31 connecté au pivot avant supérieur 20A de la portion d'assise 20 et au pivot arrière inférieur 10B. Selon un aspect de l'invention, le bras support diagonal 31 présente une longueur variable : en effet, lorsque la portion d'assise 20 est en position escamotée, le bras support diagonal 31 présente une première longueur et lorsque la portion d'assise 20 est en position déployée, le bras support diagonal 31 présente une deuxième longueur. Ce mode de réalisation est préféré car il limite le nombre de liaisons pivot. Cependant d'autres modes de réalisations peuvent être prévu en connectant le bras support diagonal 31 par des liaisons pivot indépendantes au premier et/ou deuxième bras et/ou à la portion de base et/ou d'assise.

A cet effet, le bras support diagonal 31 comprend une première pièce 31A et une deuxième pièce 31B mobile par rapport à la première pièce 31A. Selon le mode de réalisation représenté, la deuxième pièce 31B est mobile par rapport à la première pièce :
- selon une translation pendant une première partie du déplacement de la portion d'assise 20 de la position escamotée vers la position déployée,
- selon au moins une rotation de verrouillage pendant une deuxième partie du déplacement (c'est-à-dire en fin de déplacement) de la portion d'assise 20 de la position escamotée vers la position déployée. A titre d'exemple, la première pièce 31A et/ou la deuxième pièce mobile 31B est prévue en tôle emboutie / poinçonnée / nervurée / pliée, de sorte à procurer un faible encombrement et une bonne rigidité. Il est aisé de procurer une liaison glissière, en rabattant par exemple des bords d'une tôle, pour recevoir une deuxième tôle.

Selon l'exemple représenté, le bras support diagonal 31 voit sa longueur diminuer lorsqu'il passe de la position escamotée à la position déployée. Il en résulte que dans la position déployée, la portion de glissière de la deuxième pièce 31B est proche du pivot arrière inférieur 10B, ce qui procure une bonne rigidité.

Afin de garantir la position déployée de la portion d'assise 20 en figure 3, le bras support diagonal 33 est agencé pour procurer une butée mécanique à la portion d'assise 20, lorsque la portion d'assise 20 est dans la deuxième position, dite déployée.

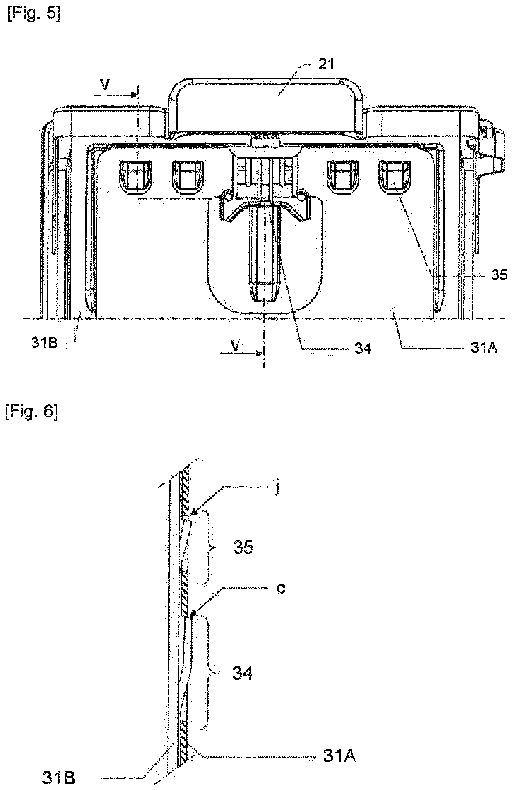

En particulier, la figure 5 illustre en détail le bras support diagonal 31 qui comprend :
- des premiers moyens de blocage 34 agencés pour bloquer le bras support diagonal 31 dans la deuxième longueur lorsque la portion d'assise 20 est dans la deuxième position, et agencés pour s'engager et résister à un premier effort, dit effort d'utilisation normale, appliqué à la portion d'assise 20,
- des deuxièmes moyens de blocage 35 agencés pour bloquer le bras support diagonal 31 dans la deuxième longueur lorsque la portion d'assise 20 est dans la deuxième position, et agencés pour s'engager et résister à un deuxième effort, dit effort de choc véhicule et supérieur au premier effort, appliqué à la portion d'assise 20, et les deuxièmes moyens de blocage 35 sont engagés uniquement lorsque le deuxième effort est appliqué à l'assise.

Comme représenté figure 5 et 6 les premiers moyens de blocage 34 et les deuxièmes moyens de blocage 35 sont chacun formés par au moins une encoche ou zone d'appui dans la première pièce 31A et par une protrusion dans la deuxième pièce 31B. Une fois les protrusions engagées dans leurs encoches respectives ou sur leurs zones d'appui lorsque la portion d'assise 20 arrive en position déployée, les moyens de blocage empêchent tout retour en position escamotée.

De plus, afin de faciliter la fabrication du bras support diagonal 31, seuls les premiers moyens de blocage 34 sont engagés en utilisation normale (c'est-à-dire avec un enfant assis sur la portion d'assise 20), comme le montre la coupe représentée figure 6, selon l'axe V-V de la figure 5. En effet, les premiers moyens de blocage 34 sont en contact (c) sur la coupe, alors qu'un jeu (j) est prévu au niveau des deuxième moyens de blocage 35.

Cependant, en cas de choc véhicule, des efforts bien plus importants sont appliqués sur la portion d'assise 20, et alors les premiers moyens de blocage 34 sont prévus pour se déformer, de sorte que le jeu j est rattrapé au niveau des deuxièmes moyens de blocage 35, et chaque protrusion des deuxièmes moyens de blocage 35 entre en contact avec son encoche respective, si bien que la portion d'assise 20 est verrouillée de manière sûre et efficace en deuxième position, c'est-à-dire déployée.

Toutefois, on notera que cette mise en oeuvre permet d'éviter de prévoir des ajustements serrés lors de la fabrication de la première pièce 31A et de la deuxième pièce 31B, car seuls les premiers moyens de blocage 34 sont engagés en situation normale (premier effort limité), et une légère déformation des premiers moyens de blocage 34 sous le deuxième effort en cas de choc véhicule permet d'engager les deuxièmes moyens de blocage 35. En conséquence, il n'est pas nécessaire de prévoir un positionnement précis des premiers moyens de blocage 34 par rapport aux deuxièmes moyens de blocage 35.

Pour déverrouiller la portion d'assise 20 de la position déployée, un bras de levier, prévu au niveau des premiers moyens de blocage 34, est actionné par la poignée 21, ce qui permet de dégager les premiers moyens de blocage, et les deuxièmes moyens de blocage, en faisant pivoter la première pièce 31A par rapport à la deuxième pièce 31B, qui peuvent ensuite coulisser l'une par rapport à l'autre pour laisser la portion d'assise 20 aller dans la position escamotée.

Des moyens de rappel élastiques sont également prévus, avec deux éléments de rappel élastique 41 et 42 prévus dans le système d'articulation, pour imposer une position d'équilibre à la portion d'assise 20, agencée entre la position escamotée et la position déployée. En d'autres termes, les éléments de rappel élastiques 41 et 42 sont pré-bandés pour commencer à sortir automatiquement la portion d'assise 20 de la position escamotée, et aussi pour commencer à replier automatiquement la portion d'assise 20 depuis la position déployée.

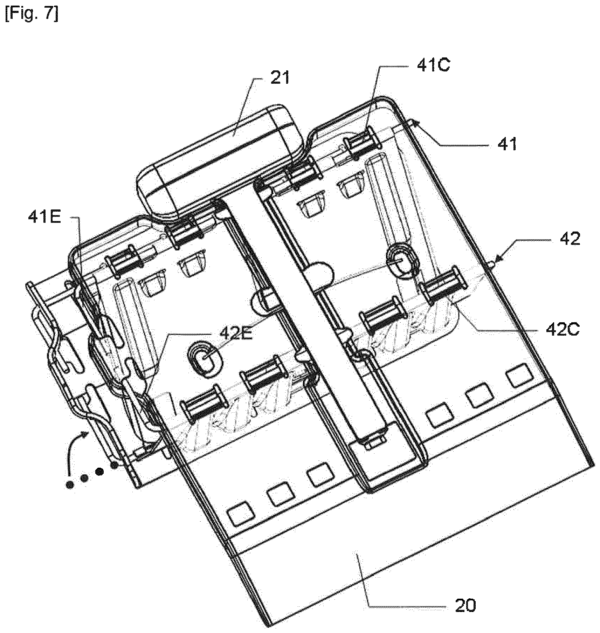

De plus, comme le montre la figure 7 (dans laquelle la portion d'assise 20 est transparente, pour montrer en traits fins les pièces situées derrière), chaque élément de rappel élastique 41 et 42 comprend au moins une portion rectiligne 41C et 42C qui forme un axe de charnière du parallélogramme déformable.

De manière avantageuse, comme représenté ici, le premier élément de rappel élastique 41 forme l'axe de charnière au niveau du pivot avant inférieur 10a (entre la portion de base 10 et le premier bras d'articulation 32) et au niveau du pivot avant supérieur 20A (entre la portion d'assise 20 et le premier bras d'articulation 32).

Le deuxième élément de rappel élastique 42 forme l'axe de charnière au niveau du pivot arrière inférieur 10B (entre la portion de base 10 et le deuxième bras d'articulation 33) et au niveau du pivot arrière supérieur 20B (entre la portion d'assise 20 et le deuxième bras d'articulation 33).

Enfin, pour garantir la fiabilité du système et notamment éviter tout démontage ou dislocation, chaque élément de rappel élastique comprend des extrémités 41E et 42E qui ont été déformées plastiquement (pliées), et ancrées dans la portion de base 10 et dans la portion d'assise 20, après montage, pour rendre le système indémontable (voir l'exemple en traits pointillés de la figure 7 en bas à gauche).

## Revendications

1. [Dispositif d'assise réglable pour véhicule, comprenant :
- une portion de base (10),
- une portion d'assise (20), mobile par rapport à la portion de base (10) entre une première position, dite escamotée, et une deuxième position, dite déployée,
- un système d'articulation (30) formant un parallélogramme déformable, connecté à la portion de base (10) et à la portion d'assise (20), et comprenant au moins un bras support diagonal (31) connecté en diagonale au parallélogramme déformable,
dans lequel le bras support diagonal (31) est agencé pour présenter une première longueur lorsque la portion d'assise (20) est dans la première position, et une deuxième longueur lorsque la portion d'assise (20) est dans la deuxième position,
dans lequel le système d'articulation (30) comprend :
- un premier bras d'articulation (32), connecté à un pivot avant inférieur (10A) de la portion de base (10) et à un pivot avant supérieur (20A) de la portion d'assise (20),
- un deuxième bras d'articulation (33) connecté à un pivot arrière inférieur (10B) de la portion de base (10) et à un pivot arrière supérieur (20B) de la portion d'assise (20),
**caractérisé en ce que** le bras support diagonal (31) est connecté au pivot avant supérieur (20A) de la portion d'assise (20) et au pivot arrière inférieur (10B) de la portion de base (10).

2. Dispositif d'assise réglable selon la revendication précédente, dans lequel le bras support diagonal (31) est agencé pour procurer une butée mécanique à la portion d'assise (20), lorsque la portion d'assise (20) est dans la deuxième position.

3. Dispositif d'assise réglable selon l'une des revendications précédentes, dans lequel le bras support diagonal (31) comprend :
- des premiers moyens de blocage (34) agencés pour bloquer le bras support diagonal (31) dans la deuxième longueur lorsque la portion d'assise (20) est dans la deuxième position, et agencés pour s'engager et résister à un premier effort, dit effort d'utilisation normale, appliqué à la portion d'assise (20),
- des deuxièmes moyens de blocage (35) agencés pour bloquer le bras support diagonal (31) dans la deuxième longueur lorsque la portion d'assise (20) est dans la deuxième position, et agencés pour s'engager et résister à un deuxième effort, dit effort de choc véhicule et supérieur au premier effort, appliqué à la portion d'assise (20),
dans lequel les deuxièmes moyens de blocage (35) sont engagés uniquement lorsque le deuxième effort est appliqué à l'assise.

4. Dispositif d'assise réglable selon l'une des revendications précédentes, dans lequel le bras support diagonal (31) comprend :
- une première pièce (31A) et
- une deuxième pièce (31B) mobile par rapport à la première pièce (31A).

5. Dispositif d'assise réglable selon la revendication précédente, dans lequel la deuxième pièce (31B) est mobile par rapport à la première pièce (31A) :
- selon une translation pendant une première partie du déplacement de la portion d'assise (20) de la position escamotée vers la position déployée,
- selon au moins une rotation de verrouillage pendant une deuxième partie du déplacement de la portion d'assise (20) de la position escamotée vers la position déployée.

6. Dispositif d'assise réglable selon l'une des revendications 4 à 5, dans lequel la deuxième pièce (31B) est montée en liaison pivot par rapport à la portion d'assise (20), et dans lequel la première pièce (31A) est montée en liaison pivot par rapport à la portion de base (10).

7. Dispositif d'assise réglable selon l'une des revendications précédentes, comprenant au moins un élément de rappel élastique (41, 42), et dans lequel au moins deux articulations pivot distinctes du parallélogramme déformable comprennent chacune une portion dudit au moins un élément de rappel élastique (41, 42).

8. Dispositif d'assise réglable selon la revendication précédente, ledit au moins un élément de rappel élastique (41, 42) étant formé par un fil élastique comprenant au moins deux portions rectilignes (41C, 42C), chaque portion rectiligne (41C, 42C) formant un axe de charnière pour chacune des deux articulations pivot distinctes.

9. Dispositif d'assise réglable selon l'une des revendications 7 à 8, dans lequel ledit au moins un élément de rappel élastique (41, 42) présente une mise en tension de sorte à imposer à la portion d'assise (20) une position d'équilibre, agencée entre la position escamotée et la position déployée.

10. Assise de siège, de préférence pour un siège de rang deux ou supérieur, comprenant au moins un dispositif d'assise réglable selon l'une des revendications précédentes.

11. Véhicule automobile comprenant au moins un dispositif d'assise réglable selon l'une des revendications 1 à 9.

12. Procédé d'assemblage d'un dispositif d'assise réglable selon l'une des revendications 1 à 9, comprenant au moins une phase d'assemblage d'une articulation pivot du parallélogramme déformable, comprenant les étapes consistant à :
- insérer une portion rectiligne (41C, 42C) d'un élément de rappel élastique formant un axe de charnière dans au moins une portion femelle de chacune des pièces liées à l'articulation pivot, de sorte à former une charnière,
- déformer plastiquement une extrémité (41E, 42E) libre de la portion rectiligne (41C, 42C), de sorte à rendre indémontable l'élément de rappel élastique de la charnière formée.

13. Procédé d'assemblage selon la revendication précédente, comprenant une étape consistant à accrocher l'extrémité (41E, 42E) pliée à l'une des pièces liées à l'articulation pivot.

14. Procédé d'assemblage selon la revendication précédente, comprenant une étape consistant à mettre en tension l'élément de rappel élastique, avant d'accrocher l'extrémité pliée à l'une des pièces liées à l'articulation pivot.

## Patentansprüche

1. Verstellbare Sitzvorrichtung für ein Fahrzeug, umfassend:
- einen Basisabschnitt (10),
- einen Sitzabschnitt (20), der relativ zu dem Basisabschnitt (10) zwischen einer ersten Position, die als eingeklappt bezeichnet wird, und einer zweiten Position, die als ausgeklappt bezeichnet wird, bewegbar ist,
- ein Gelenksystem (30), das ein verformbares Parallelogramm ausbildet, mit dem Basisabschnitt (10) und dem Sitzabschnitt (20) verbunden ist und umfassend mindestens einen diagonalen Tragarm (31), der mit dem verformbaren Parallelogramm diagonal verbunden ist, wobei der diagonale Tragarm (31) zum Aufweisen einer ersten Länge, wenn sich der Sitzabschnitt (20) in der ersten Position befindet, und einer zweiten Länge, wenn sich der Sitzabschnitt (20) in der zweiten Position befindet, angeordnet ist, wobei das Gelenksystem (30) umfasst:
- einen ersten Gelenkarm (32), der mit einem unteren vorderen Drehpunkt (10A) des Basisabschnitts (10) und mit einem oberen vorderen Drehpunkt (20A) des Sitzabschnitts (20) verbunden ist,
- einen zweiten Gelenkarm (33), der mit einem unteren hinteren Drehpunkt (10B) des Basisabschnitts (10) und mit einem oberen hinteren Drehpunkt (20B) des Sitzabschnitts (20) verbunden ist,
**dadurch gekennzeichnet, dass** der diagonale Tragarm (31) mit dem oberen vorderen Drehpunkt (20A) des Sitzabschnitts (20) und mit dem unteren hinteren Drehpunkt (10B) des Basisabschnitts (10) verbunden ist.

2. Verstellbare Sitzvorrichtung nach dem vorstehenden Anspruch, wobei der diagonale Tragarm (31) zum Bereitstellen eines mechanischen Anschlags für den Sitzabschnitt (20) angeordnet ist, wenn sich der Sitzabschnitt (20) in der zweiten Position befindet.

3. Verstellbare Sitzvorrichtung nach einem der vorstehenden Ansprüche, wobei der diagonale Tragarm (31) umfasst:
- erste Blockiermittel (34), die zum Blockieren des diagonalen Tragarms (31) in der zweiten Länge angeordnet sind, wenn sich der Sitzabschnitt (20) in der zweiten Position befindet, und zum Eingreifen und Standhalten einer ersten Kraft angeordnet sind, die als normale Nutzungskraft bezeichnet wird, die auf den Sitzabschnitt (20) ausgeübt wird,
- zweite Blockiermittel (35), die zum Blockieren des diagonalen Tragarms (31) in der zweiten Länge angeordnet sind, wenn sich der Sitzabschnitt (20) in der zweiten Position befindet, und zum Eingreifen und Standhalten einer zweiten Kraft angeordnet sind, die als Fahrzeugaufprallkraft bezeichnet wird und größer als die erste Kraft ist, die auf den Sitzabschnitt (20) ausgeübt wird,
wobei die zweiten Blockiermittel (35) nur dann in Eingriff sind, wenn die zweite Kraft auf den Sitzabschnitt ausgeübt wird.

4. Verstellbare Sitzvorrichtung nach einem der vorstehenden Ansprüche, wobei der diagonale Tragarm (31) umfasst:
- ein erstes Stück (31A) und
- ein zweites Stück (31B), das relativ zu dem ersten Stück (31A) bewegbar ist.

5. Verstellbare Sitzvorrichtung nach dem vorstehenden Anspruch, wobei das zweite Stück (31B) relativ zu dem ersten Stück (31A) bewegbar ist:
- gemäß einer Translation während eines ersten Teils der Bewegung des Sitzabschnitts (20) von der eingeklappten Position in die ausgeklappte Position,
- gemäß mindestens einer Verriegelungsrotation während eines zweiten Teils der Bewegung des Sitzabschnitts (20) von der eingeklappten Position in die ausgeklappte Position.

6. Verstellbare Sitzvorrichtung nach einem der Ansprüche 4 bis 5, wobei das zweite Stück (31B) relativ zu dem Sitzabschnitt (20) in Drehverbindung angebracht ist, und wobei das erste Stück (31A) relativ zu dem Basisabschnitt (10) in Drehverbindung angebracht ist.

7. Verstellbare Sitzvorrichtung nach einem der vorstehenden Ansprüche, umfassend mindestens ein elastisches Rückstellelement (41, 42), und wobei mindestens zwei getrennte Drehgelenke des verformbaren Parallelogramms jeweils einen Abschnitt des mindestens einen elastischen Rückstellelements (41, 42) umfassen.

8. Verstellbare Sitzvorrichtung nach dem vorstehenden Anspruch, wobei das mindestens eine elastische Rückstellelement (41, 42) durch einen elastischen Faden ausgebildet ist, umfassend mindestens zwei geradlinige Abschnitte (41C, 42C), wobei jeder geradlinige Abschnitt (41C, 42C) eine Scharnierachse für jedes der zwei getrennten Drehgelenke ausbildet.

9. Verstellbare Sitzvorrichtung nach einem der Ansprüche 7 bis 8, wobei das mindestens eine elastische Rückstellelement (41, 42) eine Spannung aufweist, um dem Sitzabschnitt (20) eine Gleichgewichtsposition aufzuzwingen, die zwischen der eingeklappten Position und der ausgeklappten Position angeordnet ist.

10. Sitzteil, vorzugsweise für einen Sitz einer zweiten Sitzreihe oder höher, umfassend mindestens eine verstellbare Sitzvorrichtung nach einem der vorstehenden Ansprüche.

11. Kraftfahrzeug, umfassend ein mindestens eine verstellbare Sitzvorrichtung nach einem der Ansprüche 1 bis 9.

12. Verfahren zum Zusammenbauen einer verstellbaren Sitzvorrichtung nach einem der Ansprüche 1 bis 9, umfassend mindestens eine Phase des Zusammenbaus eines Drehgelenks des verformbaren Parallelogramms, umfassend die folgenden Schritte:
- Einfügen eines geraden Abschnitts (41C, 42C) eines elastischen Rückstellelements, der eine Scharnierachse ausbildet, in mindestens einen weiblichen Abschnitt jedes der Stücke, die mit dem Drehgelenk verbunden sind, so dass ein Scharnier ausgebildet wird,
- plastisches Verformen eines freien Endes (41E, 42E) des geraden Abschnitts (41C, 42C) um das elastische Rückstellelement des ausgebildeten Scharniers unzerlegbar zu machen.

13. Montageverfahren nach dem vorstehenden Anspruch, umfassend einen Schritt bestehend aus einem Festmachen des gebogenen Endes (41E, 42E) an einem der Stücke, die mit dem Drehgelenk verbunden sind.

14. Montageverfahren nach dem vorstehenden Anspruch, umfassend einen Schritt bestehend aus einem Spannen des elastischen Rückstellelements, vor dem Festmachen des gebogenen Endes an einem der Stücke, die mit dem Drehgelenk verbunden sind.

## Claims

1. An adjustable seat device for a vehicle, comprising:
- a base portion (10),
- a seat portion (20) that is movable relative to the base portion (10) between a first position, referred to as retracted, and a second position, referred to as extended,
- an articulation system (30) forming a deformable parallelogram, which is connected to the base portion (10) and to the seat portion (20), and comprising at least one diagonal support arm (31) connected diagonally to the deformable parallelogram, wherein the diagonal support arm (31) is arranged to have a first length when the seat portion (20) is in the first position and a second length when the seat portion (20) is in the second position, wherein the articulation system (30) comprises:
- a first articulation arm (32), connected to a lower front pivot (10A) of the base portion (10) and to an upper front pivot (20A) of the seat portion (20),
- a second articulation arm (33) connected to a lower rear pivot (10B) of the base portion (10) and to an upper rear pivot (20B) of the seat portion (20),
**characterized in that** the diagonal support arm (31) is connected to the upper front pivot (20A) of the seat portion (20) and to the lower rear pivot (10B) of the base portion (10).

2. The adjustable seat device according to the preceding claim, wherein the diagonal support arm (31) is arranged to provide a mechanical stop for the seat portion (20) when the seat portion (20) is in the second position.

3. The adjustable seat device according to any of the preceding claims, wherein the diagonal support arm (31) comprises:
- first locking means (34) arranged to lock the diagonal support arm (31) in the second length when the seat portion (20) is in the second position, and arranged to engage and withstand a first force, referred to as normal use force, applied to the seat portion (20),
- second locking means (35) arranged to lock the diagonal support arm (31) in the second length when the seat portion (20) is in the second position, and arranged to engage and withstand a second force, referred to as vehicle impact force and greater than the first force, applied to the seat portion (20),
wherein the second locking means (35) are engaged only when the second force is applied to the seat.

4. The adjustable seat device according to any of the preceding claims, wherein the diagonal support arm (31) comprises:
- a first part (31A) and
- a second part (31B) which is movable relative to the first part (31A).

5. The adjustable seat device according to the preceding claim, wherein the second part (31B) is movable relative to the first part (31A):
- according to a translational movement during a first part of the movement of the seat portion (20) from the retracted position to the extended position,
- according to at least one locking rotation during a second part of the movement of the seat portion (20) from the retracted position to the extended position.

6. The adjustable seat device according to any of claims 4 to 5, wherein the second part (31B) is pivotally mounted relative to the seat portion (20), and wherein the first part (31A) is pivotally mounted relative to the base portion (10).

7. The adjustable seat device according to any of the preceding claims, comprising at least one resilient return element (41, 42), and wherein at least two separate pivot joints of the deformable parallelogram each comprise a portion of said at least one resilient return element (41, 42).

8. The adjustable seat device according to the preceding claim, said at least one resilient return element (41, 42) being formed by a resilient wire comprising at least two rectilinear portions (41C, 42C), each rectilinear portion (41C, 42C) forming a hinge axis for each of the two separate pivot joints.

9. The adjustable seat device according to any of claims 7 to 8, wherein said at least one resilient return element (41, 42) is tensioned so as to force the seat portion (20) into an equilibrium position arranged between the retracted position and the extended position.

10. A seat cushion, preferably for a seat in the second or following row, comprising at least one adjustable seat device according to any of the preceding claims.

11. A motor vehicle comprising at least one adjustable seat device according to any of claims 1 to 9.

12. A method for assembling an adjustable seat device according to any of claims 1 to 9, comprising at least one stage of assembling a pivot joint of the deformable parallelogram, comprising the steps of:
- inserting a rectilinear portion (41C, 42C) of a resilient return element forming a hinge axis into at least one female portion of each of the parts connected to the pivot joint, so as to form a hinge,
- plastically deforming a free end (41E, 42E) of the rectilinear portion (41C, 42C), so as to make the resilient return element of the formed hinge irremovable.

13. The assembly method according to the preceding claim, comprising a step consisting in hooking the folded end (41E, 42E) to one of the parts connected to the pivot joint.

14. The assembly method according to the preceding claim, comprising a step consisting in tensioning the resilient return element prior to hooking the folded end to one of the parts connected to the pivot joint.
